# EUROPEAN PATENT SPECIFICATION

(11) **EP 0 557 505 B1**
(45) Date of publication and mention of the grant of the patent: **03.12.1997**
(21) Application number: 92919842.2
(22) Date of filing: 11.09.1992
(51) Int. Cl.: H01H 35/14

(54) **CRASH SENSING SWITCH**
Aufprallsensorschalter.
COMMUTATEUR DE DETECTION D'UNE COLLISION FRONTALE

(30) Priority: 13.09.1991 US 759431
(43) Date of publication of application: 01.09.1993
(73) Proprietor: NORTON, Peter, Northville, MI 48167 (US)
(72) Inventor: NORTON, Peter, Northville, MI 48167 (US)
(74) Representative: Ben-Nathan, Laurence Albert
(86) International application number: US9207696
(87) International publication number: WO9306613

(56) References cited:
- WO-A-90/10301
- US-A- 3 715 535
- US-A- 4 097 699
- US-A- 4 266 107
- US-A- 4 284 863
- US-A- 4 329 549
- US-A- 4 843 877
- US-A- 4 922 065
- US-A- 4 932 260

## Description

### FIELD OF THE INVENTION

This invention relates to switches that close upon frontal collision of automobiles for activating occupant protection devices such as air bags or belt tensioners.

### BACKGROUND OF THE INVENTION

This invention is an improvement on a crash sensor which is in commercial production such as shown in US-A-4 329 549 and which is in accordance with the preamble of claim 1. The crash sensor in current production consists of a ball free to move in a sealed tube with contacts that are bridged by the ball when it moves beyond a predetermined distance. Viscous air flow around the ball causes a pressure differential which resists ball movement in proportion to the velocity of the ball with respect to the tube. The proportionality of viscous force to velocity makes the crash sensor an acceleration integrator that completes the firing circuit when a crash causes a predetermined vehicular velocity change. A permanent magnet retains the ball in a normal resting position away from the contacts and causes the vehicular velocity change required for switch closure to increase with the duration of the crash. To compensation for the variation of air viscosity with temperature the tube and ball are made of different stainless steels having a difference in their thermal expansion coefficients such that the gap between the ball and tube changes with temperature to maintain constant performance of the crash sensor over a wide temperature range. An elastomeric seal reduces transmission of cross axis vibrations to the ball and tube.

This known sensor is expensive to manufacture and one reason for the high cost is the high precision required of the ball and the tube. Another reason for the high cost is that the tube material is difficult to work. Further, the contacts are connected with lead wires and a diagnostic resistor by soldering. This creates contamination during manufacturing that cannot be tolerated in the vicinity of the ball and tube thereby requiring additional components and processing steps to maintain isolation for cleanliness. This known sensor is particularly affected by contamination because small particles can wedge between the ball and the tube and interfere with movement of the ball.

The performance of this current production crash sensor depends upon flow of air between the ball and the inner diameter of the tube which varies depending on whether the ball moves near the center of the tube or near the wall. During a crash the venturi effect creates aerodynamic forces that urge the ball toward the center of the tube whereas lateral accelerations urge the ball toward the wall. When the ball moves near the wall there is a crescent shaped air duct between the ball and the tube. When the ball moves near the center of the tube there is an annular shaped air duct between the ball and the tube. The crescent shaped opening has about one half of the resistance to air flow as the annular opening. Therefore, the velocity change required for the ball to bridge the contacts can vary substantially depending on the path of the ball.

When the velocity of the air between the ball and tube of this current production crash sensor is large the flow rate is substantially affected by the need for the pressure differential across the gap to overcome the inertia of the air and accelerate it to the maximum velocity it achieves at the narrowest point between the ball and tube. The pressure required to overcome inertia reduces the pressure available to overcome viscous resistance to flow. Furthermore, the pressure required to overcome inertia is independent of temperature because it does not depend on viscosity and causes the temperature compensation resulting from the aforementioned different expansion coefficients to be excessive. Also, inertial damping of air flow does not vary linearly with pressure so the sensor is not a velocity integrator under these circumstances. At very high decelerations it is also possible for the Reynolds number of the air flow between the ball and tube to become sufficiently large that the flow becomes turbulent which does not vary linearly with pressure and viscosity thereby also causing the dependence on temperature and pressure to be different than for viscous flow.

The size and cost and manufacturing effort of this current production crash sensor are often increased to meet the requirement that the electrical wires exit from the sensor toward the rear of the vehicle which requires routing conductors around the sensor because electrical contact is made on the side of the ball toward the front of the vehicle.

In another current production crash sensor a spring provides the bias force. The permanent magnet has the advantage of simplicity but at substantial cost. Also, the magnetic force usually decreases as the ball moves toward the contact whereas the spring force usually increases which causes slight differences in the performance of the sensors in certain car crashes. These differences are small and may favor one or the other of the designs depending on the nature of the car crash. Therefore the two designs may be considered to offer approximately equivalent performance.

U. S. patent number 4,932,260 issued June 12, 1990 to Peter Norton for "Crash Sensing Switch With Suspended Mass" describes a crash sensor having a suspended mass in which air ducts conduct the air displaced by the movement of the sensing mass and in which compensation for variation of air viscosity with temperature is accomplished by varying the normal resting position of the armature thereby varying the armature travel according to the temperature.

Copending application serial number 529,716 filed May 25, 1990 for "Compact Crash Sensing Switch With Air Channels And Diagnostic System" describes a crash sensor having a very small ball sealingly movable in a tube and in which air ducts conduct most of the air displaced by the movement of the ball and with a semiconductor device for completing the firing circuit and also having diagnostic capabilities. The semiconductor switch and diagnostic features of that invention are applicable to the present invention.

Sheet metals made of layers of metals with different thermal expansion coefficients that flex as temperature changes are well known and have been used for many years in such as home thermostats. A wide selection of materials is presently available commercially from several suppliers.

Polytetrafluoroethylene (abbreviated PTFE and sold under various trade names, one of which is "Teflon") can be inexpensively coated on materials such as aluminum and stainless steel leaving a coating having a very low dynamic coefficient of friction.

Certain plastics, one of which is polyphenylene sulfide, are routinely molded with linear dimensions accurate to one part in a thousand and better. Polyphenylene sulfide when filled with such as fiberglass or graphite filaments also offers resistance to moisture absorption, good mechanical strength, and dimensional stability over a wide temperature range.

In U. S. patent number 4,932,260 and in the copending application S.N. 529,716 referred to hereinabove air ducts are provided for viscously conducting air displaced by movement of a sensing mass. One substantial advantage of using air ducts to meter air flow rather than the space between a ball and a tube is that the air flow is more predictable because it is not affected by the position of the ball in the tube. Another substantial advantage results because the greater length of the ducts and their four sides relative to the much shorter effective length and two sides of the duct formed by the ball and the tube allow the ducts to have larger width dimensions than the gap between the ball and the tube thereby enabling inexpensive manufacture using plastic molding technology. A third substantial advantage is that a number of the ducts may be opened or plugged during manufacture of the sensors thereby allowing compensation for manufacturing variations and providing accurate and low cost calibration of the sensor.

It may be desired for a crash sensor having air ducts to match the performance of a current production sensor or to have different characteristics. Either may be accomplished because air ducts allow design flexibility not possible in a sensor of the current production ball in tube design. As described hereinabove, in the current production sensors at larger crash decelerations the air flow is affected by the inertia of the air and the flow may become turbulent. Turbulence occurs when the Reynolds number of the air flow becomes greater than a critical value that is typically in the range between 2000 and 3000.

Ducts enable control of the vehicle deceleration at which air flow becomes substantially affected by inertia or turbulence. With a large number of very small ducts the air velocity is relatively low compared with the air velocity with larger ducts and the same pressure differential. This lower velocity minimizes inertial effects. The Reynolds number is roughly proportional to the product of the smaller of the two width dimensions of the duct and the velocity of air flow. A smaller number of ducts having larger width dimensions results in a larger Reynolds number both because of the larger width and because the air flows at a higher velocity for a given pressure drop. An advantage of using ducts is that a large number of small ducts or a smaller number of larger ducts may be used to vary the acceleration at which the air flow becomes affected by inertia or turbulence in contrast to the current production sensor wherein the characteristics are completely determined by the mass of the ball and the specified calibration. Another advantage of using ducts is that in a single sensor different ducts may be made with different width dimensions thereby causing the onset of inertial effects or turbulent flow to occur at different pressure differences in different ducts thereby giving additional control over the variation of air flow with pressure.

In certain applications, for example when used as a passenger compartment sensor, it is desirable for the sensor to close at a lower velocity change when subjected to high decelerations relative the velocity change required when the sensor is subjected to lower decelerations. In the aforementioned current production sensors this is accomplished by increasing the bias force.

WO 90/10301 discloses a crash sensor having a sensing mass incorporated at the centre of a diaphragm fixed at its outer periphery in a cylindrical housing; the diaphragm having air passage slits therein.

US-A-4,266,107 discloses an acceleration sensor filled with a liquid and having a duct for free passage of the liquid therethrough and a valve for closing the duct at very high accelerations.

A general object of this invention is to provide a crash sensor for automotive vehicles which also overcomes certain disadvantages of the prior art.

### SUMMARY OF THE INVENTION

The present invention provides a crash sensor of the type having a viscously damped sensing mass movable in a sealed tube with means to conduct electricity when the sensing mass has reached a firing position which is highly reliable, compact, light in weight, and economical to manufacture.

The invention provides a crash sensor in accordance with claim 1.

One of the key features of the invention results from the discovery that in a crash sensor of the type having a viscously damped sensing mass sealingly movable in a sealed tube in which the sensing mass is a cylindrically shaped piston of about seven grams mass and with dimensions of about (one half inch) 12,7 mm diameter and (one half inch) 12,7 mm length (similar to current production ball in tube sensors) a clearance of about (0.0012 inches) 0,03 mm between the piston and the tube provides adequate sealing without additional sealing means even in the worst case when the gap is crescent shaped. With a difference in diameter between the piston and the tube of (0.0012 inch) 0,03 mm only about five percent or less of the air displaced by movement of the piston leaks through the clearance. This leakage is sufficiently small that manufacturing variations that cause leakage variations equal to a large fraction of the nominal five percent leakage do not substantially affect the performance of the sensor. This is important because the required tolerances can be inexpensively obtained and because this gap Is sufficient to assure free movement of the piston even with manufacturing variations In the diameters of the piston and the tube. It may be overly restrictive to require the leakage around the piston to be as small as five percent of the total air flow so a somewhat greater gap may be tolerable. However, since the leakage varies as the third power of the gap, if the gap is greater than about (0.0026 inches) 0,066 mm in the case of the aforementioned sensor with a seven gram sensing mass of (one half inch) 12,7 mm diameter the preponderance of the air flows through the gap and the advantages of using ducts are not achieved.

Further, in accordance with this invention, the contacts are made of material that flexes when its temperature changes thereby providing compensation for variation of air viscosity with temperature.

Further, in accordance with this invention, nominal positions of the contacts at a predetermined temperature are adjusted during manufacture of the sensor by positioning the contacts and applying a rapidly hardening material to permanently fix the nominal contact positions.

Further in accordance with this invention, the contacts are bridged by an electrical conduction means that moves behind the sensing mass rather than ahead thereby simplifying the electrical connection.

Further, in accordance with this invention, prior to bridging the contacts the preponderance of the air displaced by the movement of the sensing mass flows through axial ducts in the sensing mass. This reduces the variability in the viscous resistance to air flow compared with crash sensors in which the air path is between a ball and the inner surface of a tube and allows adjustment of the sensor performance by varying the size and number of the ducts.

Further, in accordance with this invention, valve means operate to influence the flow of air through the ducts thereby providing additional means for modifying the response of the sensor to meet specific vehicle requirements.

Further, in accordance with this invention, the contact bridging means moves relative to the sensing mass upon bridging the contacts thereby providing greater movement of the sensing mass than could be achieved solely by bending flat spring contacts of the desired dimensions thereby providing enhanced contact dwell following initial contact closure.

Further, in accordance with this invention, the contact bridging means also includes a valve element that opens upon bridging the contacts thereby providing freer movement of the sensing mass and enhanced contact dwell following initial contact closure.

Further, in accordance with this invention, the contacts urge their tips to move opposite to the movement of the sensing mass upon conducting electricity thereby providing enhanced contact dwell following initial closure.

Further, in accordance with this invention, the sensing mass moves in a cylindrical tube which it divides into two sealed compartments and the sealing between the compartments is obtained by the close fit between the sensing mass and the inner diameter of the tube.

Further, in accordance with this invention, a PTFE coating on the outer diameter of the sensing mass provides reduced frictional resistance to movement of the mass.

A complete understanding of this invention may be obtained from the description that follows taken with the accompanying drawings.

### DESCRIPTION OF THE DRAWINGS

**FIGURE 1** shows a complete crash sensor of the invention with some parts shown in section and the sensing mass in its normal or resting position;
**FIGURE 2** shows the crash sensor of the invention as illustrated in Figure 1 but with the sensing mass moved to where It just begins to bridge the contacts.
**FIGURE 3** shows the crash sensor of the invention as illustrated in Figure 1 but with the sensing mass at its point of maximum travel and the venting valve open.
**FIGURE 4** shows the sensing mass of the invention and the cup in which the sensing mass moves taken at section 4 - 4 of Figure 1.
**FIGURE 5** shows the internal side of the sensor base of the invention and illustrates the contacts (one is partially removed to reveal a resistor !ead and a feedthrough conductor), the diagnostic resistor, and the feedthrough conductor.
**FIGURE 6** shows the external side of the sensor base of the invention and illustrates placement of the feedthrough conductors and the external wires.
**FIGURE 7** is the same as Figure 2 except that it illustrates the reduced travel of the sensing mass at high temperatures resulting from bending of the contacts because of high temperature and it also illustrates the pressure responsive valve in its open condition.

### BEST MODE FOR CARRYING OUT THE INVENTION

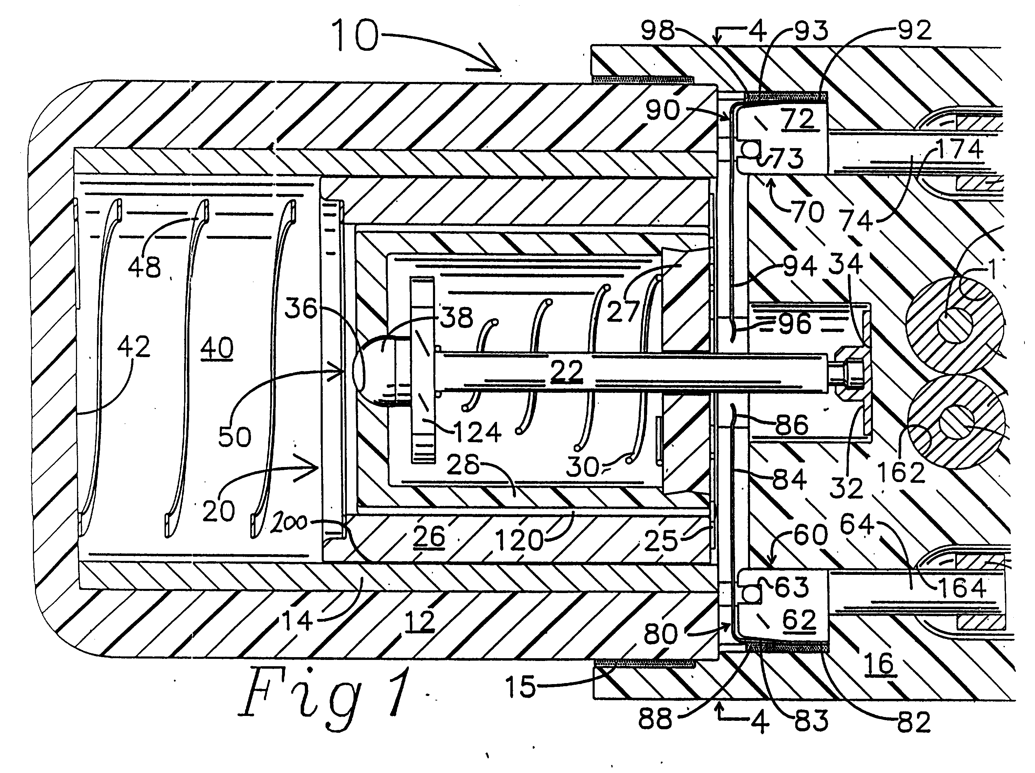

Referring now to Figures 1 through 3, the crash sensor 10 comprises a switch for sensing an acceleration pulse indicative of a crash. Upon sensing a crash the switch closes to initiate deployment of the occupant protection apparatus. It will be appreciated as the description proceeds that the invention may be implemented in different embodiments.

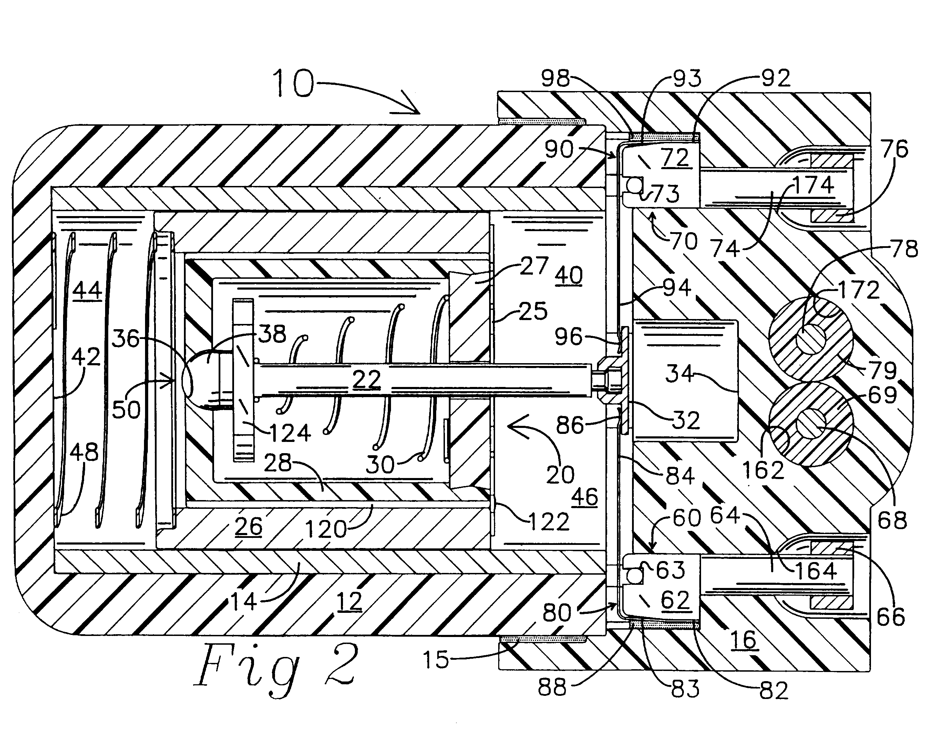

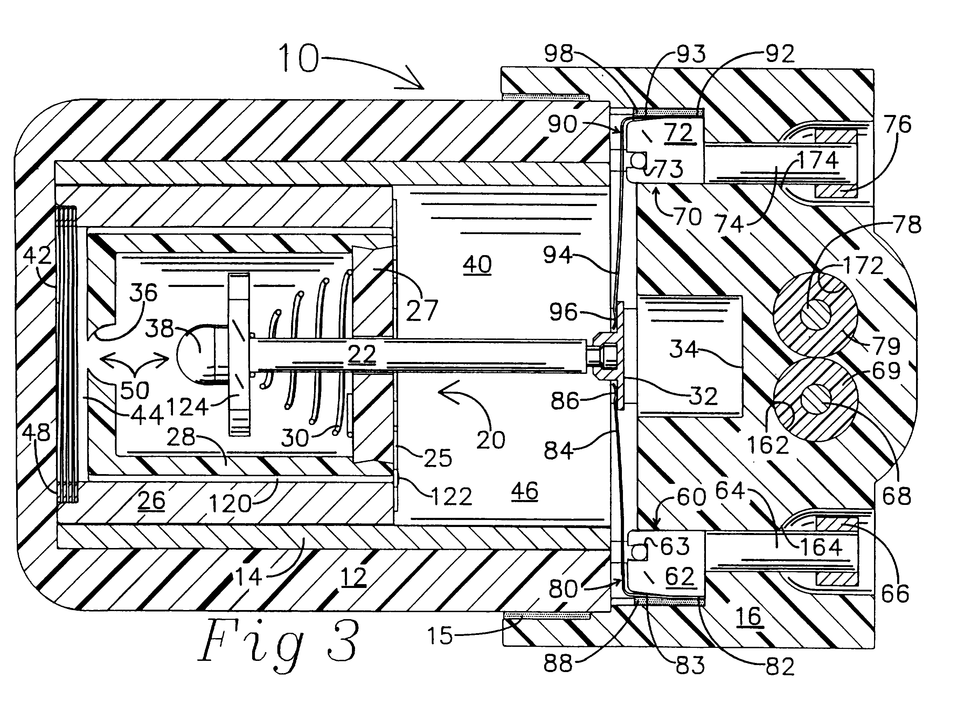

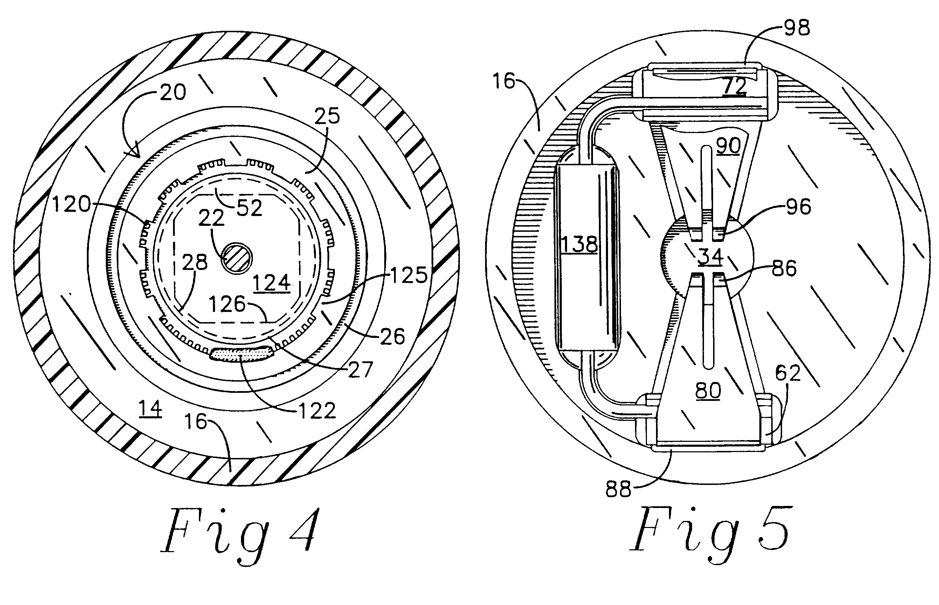

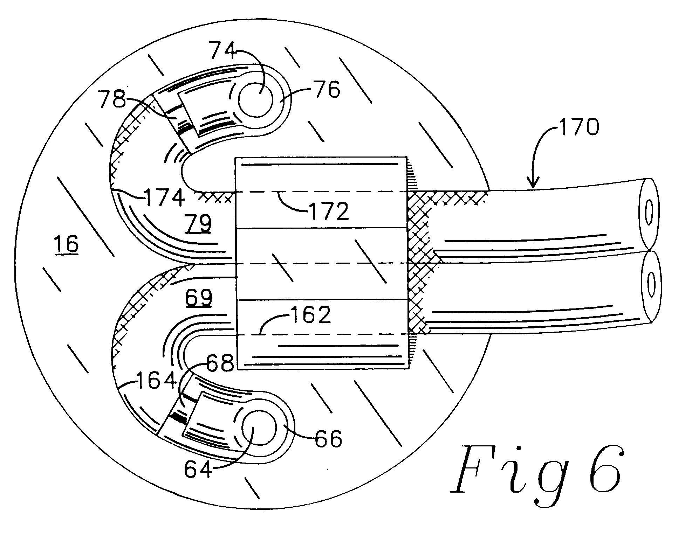

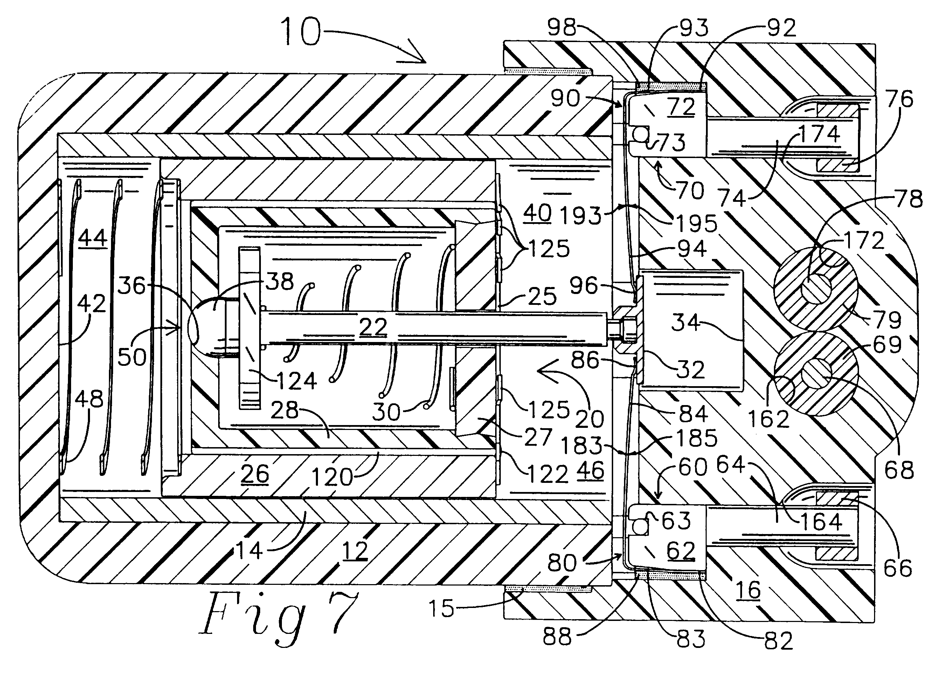

Referring particularly to Figures 1 through 6, the crash sensor 10 includes a sensing mass 20 comprising a valve element 22 having a gold plated bridging contactor 32 for bridging two electrical contacts 80 and 90. Sensing mass 20 moves in cylindrical cavity 40 defined by insert 14 of cup 12 and has a normal resting position where bridging contactor 32 rests against stop 34 in sensor base 16 as illustrated in Figure 1. During a frontal collision of a vehicle sensing mass 20 moves toward end 42 of cavity 40 to a position where bridging contactor 32 touches contact tips 86 and 96 as illustrated in Figure 2 and completes an electrical circuit comprising lead wire 68, terminal 66, electrical feedthrough conductor 60, contact 80, bridging contactor 32, contact 90, electrical feedthrough conductor 70, terminal 76, lead wire 78, and other components of the occupant protection system that are not illustrated. As it moves sensing mass 20 displaces air causing it to flow through ducts 120 from chamber 44 to chamber 46 of cavity 40. Refer to Figure 2 for identification of chambers 44 and 46. The preponderance of the displaced air flows through the ducts 120 and not between outer sleeve 26 of sensing mass 20 and the inner diameter of insert 14 of cup 12 by virtue of the close fit therebetween or other known sealing means (200). If the frontal collision is sufficiently severe sensing mass 20 will continue its movement beyond the position illustrated in Figure 2 toward end 42 of cavity 40. Figure 3 shows the crash sensor 10 with sensing mass 20 at its position of maximum travel. When sensing mass 20 moves beyond the position illustrated in Figure 2 toward the position illustrated in Figure 3 bridging contactor 32 is urged in the direction away from end 42 of cavity 40 (to the reader's right in Figures 2 and 3) by contacts 80 and 90 thereby preventing valve element 22 from continuing its movement with the other parts of sensing mass 20 and causing valve sphere 38 to separate from valve seat 36 thereby opening valve 50 as illustrated in Figure 3. When valve 50 is open air bypasses ducts 120 by flowing through valve 50.

Continuing with reference to Figures 1 through 6, the crash sensor 10 comprises cup 12 with insert 14, sensor base 16, sensing mass 20, bias spring 48, electrical feedthrough conductors 60 and 70, electrical contacts 80 and 90, diagnostic resistor 138, and lead wires 68 and 78 continuing as lead wires 170.

Sensor base 16 supports electrical feedthrough conductors 60 and 70 thereby supporting electrical contacts 80 and 90 and diagnostic resistor 138. Diagnostic resistor 138 may be additionally supported by attachment by gluing or other means to sensor base 16. Contact adjustment material 88 and 98 also assists in the support of contacts 80 and 90. Sensor base 16 mates with cup 12 and the combination forms a tight enclosure. Sealing means 15 at the junction of the cup 12 and the sensor base 16 seals the enclosure against moisture and dirt intrusion. Sealing means (not illustrated) around extension shafts 64 and 74 of electrical feedthrough conductors 60 and 70 may also be used to completely seal sensor 10. However, it is presently believed that the best method of providing sealing around extension shafts 64 and 74 of electrical feedthrough conductors 60 and 70 is by forming the sensor base 16 around extension shafts 64 and 74 of electrical feedthrough conductors 60 and 70 in the injection molding machine. Either method provides a sensor suitable for use in harsh environments without an additional outer enclosure.

Electrical feedthrough conductor 60 comprises an enlarged head 62 having a channel 63 adapted for connecting to a resistor lead wire and an extension shaft 64 that extends through sensor base 16. Electrical feedthrough conductor 70 comprises an enlarged head 72 having a channel 73 adapted for connecting to a resistor lead wire and an extension shaft 74 that extends through sensor base 16. Contact 80 comprises attachment segment 82 adapted for attachment to enlarged head 62 of electrical feedthrough conductor 60, adjustment segment 83, contact arm 84, and contact tip 86. Surface 183 of contact 80 is made of a material having a greater thermal expansion coefficient than the material of which surface 185 of contact 80 is made. Refer to Figure 7 for identification of contact surfaces 183 and 185 of contact 80. Contact adjustment material 88 is applied as a liquid during manufacture of the crash sensor 10 and hardens to fix the nominal position of contact tip 86 to accurately meet the performance specifications of the sensor. Similarly, contact 90 comprises attachment segment 92 adapted for attachment to enlarged head 72 of electrical feedthrough conductor 70, adjustment segment 93, contact arm 94, and contact tip 96. Surface 193 of contact 90 is made of a material having a greater thermal expansion coefficient than the material of which surface 195 of contact 90 is made. Refer to Figure 7 for identification of contact surfaces 193 and 195 of contact 90. Contact adjustment material 98 fixes the nominal position of contact tip 96.

Contact 80 is attached at attachment segment 82 to enlarged head 62 of electrical feedthrough conductor 60. Similarly, contact 90 is attached at attachment segment 92 to enlarged head 72 of electrical feedthrough conductor 70. One method of attachment is to weld the attachment segments 82 and 92 to the electrical feedthrough conductors 60 and 70 respectively. Other methods of attachment will be obvious to those skilled in the art.

Diagnostic resistor 138 is preferably installed by pressing one of its leads into channel 63 of electrical feedthrough conductor 60 and the other lead into channel 73 of electrical feedthrough conductor 70 thereby providing an electrical connection and mechanical installation without solder or additional components.

It is necessary to make a final adjustment of the contact height because the bends between the adjustment segments 83 and 93 of the contacts 80 and 90 and the contact arms 84 and 94 respectively cannot be accurately made. After the bend is made the contacts must be heated to relieve stresses which causes a variability of about plus or minus three degrees in the angles of the bends. Therefore it is necessary provide a final adjustment. This is done by applying contact fixing material 88 and 98 in liquid form and causing it to harden while holding contact arms 84 and 94 in positions that result in the desired contact heights after the contact fixing material 88 and 98 has hardened.

Lead wires 68 and 78 are sheathed by plastic coverings 69 and 79, preferably in a nonwicking manner (a technology known in the field of producing insulated wire). The exterior face of sensor base 16 has channels 164 and 174 to contain lead wires 68 and 78 with their insulation 69 and 79 and terminals 66 and 76 respectively. One end of channel 164 terminates at the feedthrough conductor 60 and the other end terminates at cylindrical tunnel 162. Similarly, one end of channel 174 terminates at the feedthrough conductor 70 and the other end terminates at cylindrical tunnel 172. Lead wires 68 and 78 pass through tunnels 162 and 172 respectively before exiting from sensor 10 thereby providing strain relief for lead wires 170. Lead wires 68 and 78 are attached respectively to terminals 66 and 76 which are attached respectively to extension shafts 64 and 74 of electrical feedthrough conductors 60 and 70. One suitable means for attaching lead wires 68 and 78 to terminals 66 and 76 would be by crimping. One suitable means for attaching terminals 66 and 76 to extension shafts 64 and 74 would be by providing for an interference fit. Other means of attachment will be obvious to those skilled in the art. After the lead wires 68 and 78, connectors 66 and 76, and the feedthrough conductors 60 and 70 are assembled to sensor base 16 channels 164 and 174 are filled with potting material (not illustrated) which solidifies thereby further sealing the interior of sensor 10 against intrusion of debris and liquids. One material suitable for sealing means 15 and for sealing around extension shafts 64 and 74 of electrical feedthrough conductors 60 and 70 is epoxy glue. One suitable potting material is epoxy potting material. Many suitable epoxy and non-epoxy adhesives and potting materials are known to those skilled in the art and the selection of particular sealing and/or potting materials should be based on the particular requirements of the materials used to make the sensor. Other methods of sealing cup 12 to sensor base 16, sealing around extension shafts 64 and 74 of electrical feedthrough conductors 60 and 70, and filling channels 164 and 174 will also be obvious to those skilled in the art.

Sensing mass 20 comprises valve element 22, outer sleeve 26, spring retaining button 27, fluted cup 28 and valve spring 30. It may also include pressure responsive valve 25. Valve element 22 comprises bridging contactor 32, valve sphere 38, and radial extension 124 having flat sides 126 which in combination with the inside diameter of fluted cup 28 form air ducts 52. Refer to Figure 4 for an illustration of radial extension 124, flat sides 126, air ducts 52, and pressure responsive valve 25 with duct sealing ears 125. Fluted cup 28 comprises valve seat 36 and flutes on its outer diameter which in combination with the inner diameter of outer sleeve 26 form ducts 120 which are preferably axial ducts to facilitate removal of fluted cup 28 from the mold. However, other duct configurations may be selected by those skilled in the art to achieve similar or other performance. Valve 50 of sensing mass 20 comprises valve seat 36 of fluted cup 28, valve sphere 38 of valve element 22, and valve spring 30. Pressure responsive valve 25 comprises resilient duct sealing ears 125 positioned to block air flow through certain ducts.

Outer sleeve 26 of sensing mass 20 is preferably assembled to fluted cup 28 by an interference fit. After the two parts are assembled the resistance of all of the ducts in parallel to air flow is measured and a number of ducts are blocked with adhesive 122 (refer to Figure 4 for an illustration of adhesive 122) to provide a predetermined resistance to air flow. Valve element 22 moves axially in the inner diameter of fluted cup 28. Radial extension 124 of valve element 22 engages the inner diameter of fluted cup 28 to limit radial movement of valve sphere 38 while allowing axial movement. One end of valve spring 30 is held by spring retaining button 27. The other end of valve spring 30 urges radial extension 124 of valve element 22 in the direction such that valve sphere 38 of valve element 22 is urged to press against valve seat 36 of fluted cup 28 thereby urging valve 50 to be in its closed condition. Pressure responsive valve 25 is preferably cut from a sheet of resilient material and bonded to outer sleeve 26 of sensing mass 20.

The height of contact tips 86 and 96 above stop 34 in sensor base 16 determines the travel of sensing mass 20 before bridging contactor 32 bridges the contacts 80 and 90. A significant advantage of this invention over the aforementioned current production sensor is that the contact heights after adjustment and the thickness of bridging contactor 32 are the sole determinants of the travel required of sensing mass 20 to bridge the contacts so that the performance of the sensor 10 is substantially determined by the adjustment of the resistance of ducts 120 to air flow as described hereinabove and the contact height adjustment also described hereinabove. The only other variable factor that significantly affects performance is the manufacturing variation in the gap between the outer diameter of outer sleeve 26 of sensing mass 20 and the inner diameter of insert 14 of cup 12 which, as fully described hereinabove, allows leakage equal to only a few percent of the air flow through the ducts 120. Therefore the design is conducive to inexpensive adjustment as the sensor is manufactured to provide highly repeatable performance at low cost.

Cup 12, sensor base 16, valve element 22 (except bridging contactor 32), and fluted cup 28 are preferably made of an injection molded plastic which is dimensionally stable and has minimal tendency to absorb water. One suitable plastic is polyphenylene sulfide filled with an appropriate filler such as fibers of glass or graphite. Outer sleeve 26 of sensing mass 20 is preferably made of a dense material to maximize the mass of sensing mass 20 while minimizing the overall size of sensor 10. The outside diameter of outer sleeve 26 is preferably coated with a friction reducing material to minimize friction against the inside diameter of insert 14 of cup 12. A suitable friction reducing material would be PTFE. Suitable materials for insert 14 of cup 12 and outer sleeve 26 would be stainless steels selected for their corrosion resistance and ease of manufacture. Pressure responsive valve 25 may be made of any suitable resilient material having the appropriate resiliency to bend upon application of a predetermined pressure and allow air flow through the ducts it blocks at lower pressures. Electrical feedthrough conductors 60 and 70 may be made of any suitable electrical conductor which is preferably selected to minimize manufacturing cost. The materials referred to hereinabove are only suggestions and other materials may be selected by those skilled in the art. Contacts 80 and 90 are made of multiple layers of materials having different thermal expansion coefficients which cause them to bend when the temperature changes. Contact tips 86 and 96 are preferably plated with gold for minimum electrical resistance when bridged by bridging contactor 32.

The operation of the crash sensor 10 of the invention will now be described with reference to Figures 1 through 7. In operation of the system, bridging contactor 32 of sensing mass 20 is normally held against stop 34 by the force of bias spring 48 thereby keeping sensing mass 20 in a normal resting position. When a deceleration much greater than one g (one times the acceleration of gravity) is applied to the crash sensor 10, as would happen during an automobile crash, the inertia of the sensing mass 20 causes it to move toward end 42 of cavity 40 carrying bridging contactor 32 away from stop 34 and toward contact tips 86 and 96 of electrical contacts 80 and 90. For this movement to occur it is necessary (except at extremely high decelerations) for some of the air in chamber 44 to pass either through the gap between outer sleeve 26 of sensing mass 20 and the inside diameter of insert 14 of cup 12 or through the ducts 120 into the chamber 46 (refer to Figure 2 for an illustration of chambers 44 and 46). The movement of the air, whether through the gap between the outside diameter of sensing mass 20 and the inside diameter of insert 14 or through the ducts 120, is resisted by the viscosity of the air thereby causing a pressure differential with the pressure in chamber 44 being greater than the pressure in chamber 46. This pressure differential is proportional to the deceleration of the sensor (to the extent that the force of the bias spring 48 and acceleration of the sensing mass 20 relative to sensor 10 can be ignored) and therefore so is the rate of air flow from chamber 44 to chamber 46 (to the extent that the air flow is not inertial or turbulent) and contact is made when a predetermined amount of air has flowed from chamber 44 to chamber 46 indicating that sensor 10 has experienced a predetermined velocity change. (At higher decelerations there is some compression and expansion of the air in chambers 44 and 46 respectively so at higher decelerations somewhat less than the predetermined amount of air will have flowed from chamber 44 to chamber 46 when contact is made). The bias spring 48 counteracts somewhat more than one g (one times the acceleration of gravity) of the deceleration applied to the crash sensor during a crash. During a short crash pulse where the deceleration may exceed one hundred times the acceleration of gravity the bias spring 48 has little effect but during a much longer crash pulse having much lower decelerations its affect is substantial and it causes the crash sensor to require a substantially greater velocity change before closing.

When the bridging contactor 32 of sensing mass 20 contacts both electrical contact tips 86 and 96 as illustrated in Figure 2 it completes an electrical circuit comprising lead wire 68, terminal 66, electrical feedthrough conductor 60, contact 80, bridging contactor 32, contact 90, electrical feedthrough conductor 70, terminal 76, lead wire 78, and other components of the occupant protection system that are not illustrated.

When current begins flowing through this circuit electric heating of the contacts 80 and 90 causes an effect that may be useful depending on the resistivity of the contact material. As current flows through the contacts 80 and 90 they are heated in proportion to the product of the resistivity of the contact material and the square of the current. This heating of the contacts causes them to attempt to bend in the direction illustrated in Figure 7 relative to the nominal contact positions illustrated in Figures 1 and 2. This bending caused by electrical heating increases the duration of contact between the contact tips 86 and 96 and the bridging contactor 32 because the resting position of contact tips 86 and 96 shifts toward stop 34 in sensor base 16 which increases the distance bridging contactor 32 must return before it no longer contacts the contact tips 86 and 96.

After sensing mass 20 moves past the position illustrated in Figure 2 toward the position illustrated in Figure 3 the force applied by contacts 80 and 90 to bridging contactor 32 overwhelms the urging of valve spring 30 and causes valve sphere 38 to separate from valve seat 36 thereby opening valve 50. The pressure differential between chambers 44 and 46 is thereby relieved as air flows through valve 50 and ducts 52 from chamber 44 to chamber 46 and the motion of sensing mass 20 (excluding valve element 22 which is moving independently) is no longer affected by the pressure differential and it can move freely except for the urging of valve spring 30 and bias spring 48. If the vehicular velocity change is sufficiently great sensing mass 20 will continue moving until it reaches end 42 of cavity 40 as illustrated in Figure 3. The increased air flow after valve 50 opens frees sensing mass 20 to move toward end 42 of cavity 40 and improves the contact dwell characteristics of sensor 10. A second advantage of the reduced movement of valve element 22 relative to the remainder of sensing mass 20 is that the bending required of contacts 80 and 90 is reduced relative to the bending that would be required If there were no relative movement of valve element 22.

Depending on the materials they are made of, outer sleeve 26 of sensing mass 20 may have a smaller thermal expansion coefficient than insert 14 of cup 12. If so this may partially compensate for the variation of air viscosity with temperature. At lower temperatures the clearance between outer sleeve 26 of sensing mass 20 and the inner diameter of insert 14 of cup 12 will decrease. This increases the viscous resistance to the movement of air through the clearance gap at lower temperatures and partially compensates for the reduced viscosity of air at lower temperatures and the resulting lower resistance of ducts 120 to air flow. At higher temperatures the clearance increases. This decreases the viscous resistance to the movement of air through the clearance gap at higher temperatures and partially compensates for the increased viscosity of air at higher temperatures and the resulting greater resistance of ducts 120 to air flow. At all operating temperatures this gap is so small that the preponderance of the air flow is through the air ducts 120. In the preferred embodiment of the invention all or the preponderance of the temperature compensation results from the bending of contacts 80 and 90 with temperature and none or only a small part of the compensation results from differential expansion of insert 14 of the cup 12 relative to outer sleeve 26 of sensing mass 20.

At a nominal temperature the contact arms 84 and 94 of contacts 80 and 90 lie in a common plane as illustrated in Figures 1 and 2. At temperatures greater than the nominal temperature and when no force is applied the surfaces 183 and 193 of contacts 80 and 90 respectively expand more and become longer than the surfaces 185 and 195 respectively thereby causing contact arms 84 and 94 to bend thereby reducing the distance between stop 34 in sensor base 16 and contact tips 86 and 96 and therefore reducing the distance sensing mass 20 must move from its normal resting position before bridging contactor 32 bridges contacts 80 and 90 as illustrated in Figure 7. This compensates for the increased viscosity of air at higher temperatures and the resulting increased resistance of the ducts 120 to air flow and thereby minimizes the effect of temperature on the axial crash deceleration pulse required for switch closure. Similarly, at temperatures less than the aforementioned nominal temperature and when no force is applied the surfaces 183 and 193 of contacts 80 and 90 respectively contract more and become shorter than the surfaces 185 and 195 thereby causing contact arms 84 and 94 to bend in the direction opposite the bending illustrated in Figure 7 thereby increasing the distance between stop 34 in sensor base 16 and contact tips 86 and 96 and increasing the distance sensing mass 20 must move from its normal resting position before bridging contactor 32 bridges contacts 80 and 90 thereby compensating for the reduced viscosity of air at lower temperatures.

The operation of pressure responsive valve 25 is as follows. When the sensor is at rest duct sealing ears 125 block air flow through certain of the ducts 120 as illustrated in Figure 4. When the pressure difference between chambers 44 and 46 is small as would happen when relatively small decelerations are being experienced by crash sensor 10 the pressure difference between chambers 44 and 46 is applied to duct sealing ears 125 but is insufficient to lift them and they continue to block air flow through the aforementioned blocked ducts 120. When larger decelerations are being experienced by crash sensor 10 a larger pressure difference is applied to duct sealing ears 125 and lifts them and allows air to flow through all of the ducts 120. The larger number of active ducts results in increased air flow relative to the air which would flow if some of the ducts 120 were still blocked which allows sensing mass 20 to move more rapidly than if some of the ducts were still blocked and therefore bridging contactor 32 reaches contact tips 86 and 96 sooner than if only some of the ducts were conducting air. Thereby sensor 10 is adapted to close at lower velocity changes when subjected to higher decelerations and to close at higher velocity changes when subjected to lower decelerations.

Although the description of this invention has been given with reference to a particular embodiment, it is not to be construed in a limiting sense. Many variations and modifications will now occur to those skilled in the art. For a definition of the invention reference is made to the appended claims.

## Claims

1. A crash sensor (10) for an occupant protection system of a vehicle of the type comprising a sensing mass (20) movable in close proximity to the wall of a sealed tube (14) during a crash from a normal resting position and sensing means (32,80,90) for ascertaining when said sensing mass has moved a predetermined distance from said normal resting position, said tube (14) being filled with a gas, a volume of said gas approximating the product of the cross-sectional area of the tube (14) and the distance moved by the sensing mass (20) being caused to flow viscously by said movement of said sensing mass (20) thereby causing said movement over said predetermined distance to be indicative that the vehicle has experienced a predetermined velocity change during a crash characterized by:
sealing means (200) for limiting flow of said gas between said sensing mass and said tube (14), and
at least one duct (120) for viscously conducting said gas to bypass said sealing means.

2. A crash sensor as defined in Claim 1 wherein:
said sealing means comprises a clearance (200) between said sensing mass (20) and said tube (14).

3. A crash sensor as defined by Claim 2 wherein:
said clearance (200) is less than three thousandths of an inch and large enough for said sensing mass (20) and said tube (14) to be made inexpensively.

4. A crash sensor as defined by Claim 1 wherein:
said duct (120) extends linearly in the direction of the axis of said tube (14).

5. A crash sensor as defined by Claim 1 wherein:
said sensing mass (20) comprises a first element (28) having an outer cylindrical surface and a second element (26) having an inner cylindrical surface adapted to mate with said outer cylindrical surface and wherein,
said duct (120) for viscously conducting said gas is defined by one of said cylindrical surfaces and an impression formed in the other of said cylindrical surfaces.

6. A crash sensor as defined in Claim 1 including:
a valve (50) having an open state and a normally closed state and being adapted to conduct said gas to bypass said duct (120) when in said open state and not when in said closed state, and
means (32) for opening said valve upon a predetermined movement of said sensing mass.

7. A crash sensor as defined by Claim 6 including a contact (80,90) and a contact bridging means (32), and wherein:
said means for opening said valve comprises said contact interacting with said contact bridging means.

8. A crash sensor as defined by Claim 1 including a plurality of said ducts (120) and including:
valve means (25) having an open state and a closed state and,
said valve means being adapted to block flow of said gas through at least one of said ducts when in its closed state and not block said flow of said viscous medium when in its open state.

## Patentansprüche

1. Aufprallsensor (10) für ein Insassenschutzsystem eines Fahrzeugs, der eine Sensormasse (20), welche während eines Aufpralls in unmittelbarer Nähe der Wandung eines abgedichteten Rohres (14) aus einer normalen Ruhelage bewegbar ist, und eine Sensoreinrichtung (32, 80, 90) zum Feststellen, wann sich die Sensormasse um eine vorgegebene Strecke aus der normalen Ruhelage bewegt hat, aufweist, wobei das Rohr (14) mit einem Gas gefüllt ist und durch die Bewegung der Sensormasse (20) verursacht wird, daß ein Volumen des Gases, welches ungefähr dem Produkt aus der Querschnittsfläche des Rohres (14) und der von der Sensormasse (20) zurückgelegten Strecke entspricht, viskos strömt, wodurch die Bewegung über die vorgegebene Strecke verursacht wird, um anzuzeigen, daß das Fahrzeug während eines Aufpralls eine vorgegebene Geschwindigkeitsänderung erfahren hat,
**gekennzeichnet durch:**
- eine Dichteinrichtung (200) zum Begrenzen der Strömung des Gases zwischen der Sensormasse und dem Rohr (14), und
- wenigstens einen Kanal (120) zum viskosen Leiten des Gases, um die Dichteinrichtung zu überbrücken.

2. Aufprallsensor nach Anspruch 1,
**dadurch gekennzeichnet, daß**
die Dichteinrichtung einen Spalt (200) zwischen der Sensormasse (20) und dem Rohr (14) aufweist.

3. Aufprallsensor nach Anspruch 2,
**dadurch gekennzeichnet, daß**
der Spalt (200) kleiner ist als drei Tausendstel inch und groß genug ist, um die Sensormasse (20) und das Rohr (14) kostengünstig herstellen zu können.

4. Aufprallsensor nach Anspruch 1,
**dadurch gekennzeichnet, daß**
der Kanal (120) linear in Richtung der Achse des Rohrs (14) verläuft.

5. Aufprallsensor nach Anspruch 1,
**dadurch gekennzeichnet, daß**
- die Sensormasse (20) ein erstes Element (28) mit einer äußeren zylindrischen Oberfläche und ein zweites Element (26) mit einer inneren zylindrischen Oberfläche, welche mit der äußeren zylindrischen Oberfläche zusammenpaßt, aufweist und
- der Kanal (120) zum viskosen Leiten des Gases von einer der zylindrischen Oberflächen und einer in der anderen der zylindrischen Oberflächen ausgebildeten Vertiefung gebildet wird.

6. Aufprallsensor nach Anspruch 1,
**dadurch gekennzeichnet, daß**
- ein Ventil (50) vorgesehen ist, welches eine offene Stellung sowie eine normalerweise geschlossene Stellung annehmen sowie das Gas leiten kann, um den Kanal (120) zu überbrücken, wenn es die geöffnete Stellung annimmt, und ihn nicht zu überbrücken, wenn es die geschlossene Stellung annimmt, und
- eine Einrichtung (32) zum Öffnen des Ventils bei einer vorgegebenen Bewegung der Sensormasse vorgesehen ist.

7. Aufprallsensor nach Anspruch 6,
**dadurch gekennzeichnet, daß**
- ein Kontakt (80, 90) und eine Kontaktüberbrückungseinrichtung (32) vorgesehen sind und
- die Einrichtung zum Öffnen des Ventils den Kontakt beinhaltet, der mit der Kontaktüberbrückungseinrichtung zusammenwirkt.

8. Aufprallsensor nach Anspruch 1,
**dadurch gekennzeichnet, daß**
- mehrere Kanäle (120) vorgesehen sind,
- eine Ventileinrichtung (25) vorgesehen ist, welche eine offene Stellung und eine geschlossene Stellung annehmen kann, und
- die Ventileinrichtung die Strömung des Gases durch wenigstens einen der Kanäle blockieren kann, wenn sie sich in ihrer geschlossenen Stellung befindet, und die Strömung des viskosen Mediums nicht blockieren kann, wenn sie sich in ihrer offenen Stellung befindet.

## Revendications

1. Détecteur de collision (10) pour un système de protection d'un occupant d'un véhicule du type comprenant une masse de détection (20) déplaçable à proximité étroite de la paroi d'un tube scellé (14) au cours d'une collision, depuis une position de repos normale, et un moyen de détection (32, 80, 90) pour déterminer quand ladite masse de détection s'est déplacée d'une distance prédéterminée depuis ladite position de repos normale, ledit tube (14) étant rempli d'un gaz, un volume dudit gaz, correspondant approximativement au produit de la section transversale du tube (14) et de la distance de déplacement de la masse de détection (20), étant amené à s'écouler de manière visqueuse par ledit déplacement de ladite masse de détection (20), en provoquant ainsi l'indication, par ledit déplacement sur ladite distance prédéterminée, que le véhicule a subi un changement de vitesse prédéterminé au cours d'une collision, caractérisé par :
un moyen de scellement (200) pour limiter l'écoulement dudit gaz entre ladite masse de détection et ledit tube (14), et
au moins un conduit (120) pour conduire de manière visqueuse ledit gaz pour contourner ledit moyen de scellement.

2. Détecteur de collision selon la revendication 1, dans lequel :
ledit moyen de scellement comprend un dégagement (200) entre ladite masse de détection (20) et ledit tube (14).

3. Détecteur de collision selon la revendication 2, dans lequel :
ledit dégagement (200) est inférieur à trois millièmes de pouce et suffisamment grand pour que ladite masse de détection (20) et ledit tube (14) puissent être fabriqués à bon marché.

4. Détecteur de collision selon la revendication 1, dans lequel :
ledit conduit (120) s'étend linéairement dans la direction de l'axe dudit tube (14).

5. Détecteur de collision selon la revendication 1, dans lequel :
ladite masse de détection (20) comprend un premier élément (28) ayant une surface cylindrique extérieure et un deuxième élément (26) ayant une surface cylindrique intérieure adaptée pour s'accoupler avec ladite surface cylindrique extérieure et dans lequel
ledit conduit (120) pour conduire de manière visqueuse ledit gaz est défini par l'une desdites surfaces cylindriques et une impression formée dans l'autre desdites surfaces cylindriques.

6. Détecteur de collision selon la revendication 1, comportant :
une soupape (50) ayant un état ouvert et un état normalement fermé et étant adaptée pour conduire ledit gaz pour contourner ledit conduit (120) lorsqu'elle est dans ledit état ouvert mais pas lorsqu'elle est dans ledit état fermé, et
un moyen (32) pour ouvrir ladite soupape lors d'un déplacement prédéterminé de ladite masse de détection.

7. Détecteur de collision selon la revendication 6, comportant un contact (80, 90) et un moyen de recouvrement de contact (32), et dans lequel :
ledit moyen pour ouvrir ladite soupape comprend l'interaction dudit contact avec ledit moyen de recouvrement de contact.

8. Détecteur de collision selon la revendication 1, comportant une pluralité desdits conduits (120) et comportant :
un moyen de soupape (25) ayant un état ouvert et un état fermé et
ledit moyen de soupape étant adapté pour bloquer l'écoulement dudit gaz à travers au moins l'un desdits conduits lorsqu'il est dans l'état fermé et pour ne pas bloquer ledit écoulement dudit milieu visqueux lorsqu'il est dans l'état ouvert.
